# EUROPEAN PATENT APPLICATION

(11) **EP 3 514 743 A1**
(43) Date of publication of application: **24.07.2019**
(21) Application number: 18152749.0
(22) Date of filing: 22.01.2018
(51) Int. Cl.: G06Q 10/06

(54) **DEVICE AND METHOD FOR PROVIDING INSTRUCTION DATA FOR MANUFACTURING AN INDIVIDUALIZED PRODUCT**

(71) Applicant: Siemens Aktiengesellschaft, 80333 München (DE)
(72) Inventor: ZECHLIN, Oliver, 6300 Zug (CH); FALK, Rainer, 85586 Poing (DE)

(57) **Abstract**

An object of the present application is to provide a device, which is adapted to provide instruction data to a manufacturing device for manufacturing an individualized product. Hereby, the device comprises a data receiving unit, which is adapted to receive first data, wherein each of the first data refers to at least one manufacturing specification of the product, and to receive second data, wherein each of the second data refers to at least one individualization specification of the product. The device further comprises a data allocation unit, which is adapted to allocate at least one of the second data to at least one of the first data. The device further comprises a data provision unit, which is adapted to provide instruction data to the manufacturing device based on the first data and the allocated second data. Hereby, the instruction data are indicative of a unique appearance of the product.

## Description

### TECHNICAL FIELD

Various embodiments of the invention enable techniques of providing individualized instruction data to a manufacturing device.

### BACKGROUND

Individualized products find a rising demand in a wide technological range, since such an individualization may enable the provision of forgery-proof products. Such a rising demand for forgery-proof products also goes along with a steady increase of automated mass-production manufacturing of different products.

Recently, it has already been established to offer forgery-proof manufacturing IT data, such as IT data provided for three-dimensional (3D) printing manufacturing, in a copy-proof manner. Further, it has recently been established to stream an IT-based 3D model towards a respective 3D printing device, thereby avoiding the existence of copyable 3D printing data, which also improves the protection against forgery.

Additionally, individualization of products has been established to use logos implemented in the product to be manufactured, which may represent a personalized logo of the user intended to use this product. Hereby, conventional techniques, e.g. optical techniques, are intended to be used that improve the attention of any observer to the respective personalized logo.

Apart from this, documents US 8,531,247 B2, US 8,892,616 B2, US 8,300,811 B2, US 9,147,088 B2, US 9584311 B2, EP 2976707 B1, EP 2 605 445 B1, EP 2 870 565 A1, EP 2 891 102 A1, WO 2017137256 A1, EP 2870565 B1, EP 3028140 B1, EP 17175275 and US 8 843 761 B2 are well known to a skilled person.

### SUMMARY

In order to provide forgery-proof products to different manufacturing locations implemented in an IT network, there is a need to individualize product data in advance to manufacturing the respective product.

It is an object to provide a device, which is adapted to process manufacturing data of a product in order to improve forgery-proof of the respective product.

A device and a method according to the independent claims are provided. Further embodiments are defined in the dependent claims.

According to an embodiment, a device is disclosed, which is adapted to provide instruction data to a manufacturing device for manufacturing an individualized product. Hereby, the device comprises a data receiving unit. Such a data receiving unit is adapted to receive first data, wherein each of the first data refers to at least one manufacturing specification of the product. Such a data receiving unit is further adapted to receive second data, wherein each of the second data refers to at least one individualization specification of the product. The device further comprises a data allocation unit, which is adapted to allocate at least one of the second data to at least one of the first data. In addition, the device comprises a data provision unit, which is adapted to provide instruction data to the manufacturing device based on the first data and the allocated second data. Hereby, the instruction data are indicative of a unique appearance of the product.

Such an approach is based on the finding that, prior to producing a product, individualization data may be allocated to the respective manufacturing specification, in order to individualize the product prior to production. As a matter of consequence, automated mass production of the product is possible. Efficient production is possible, even when being used in connection with the present techniques which provide for product individualization. The present approach also facilitates a delocalized character of the manufacturing. Hereby, the techniques do not limit the manufacturing to a specific location, while at the same enabling an individualization. Thus, the device is adapted not to substantially impair the efficiency of the manufacturing, while at the same time improving forgery-proof of a product using individualization.

According to another embodiment, a method for providing instruction data to a manufacturing device for manufacturing an individualized product is disclosed. The method comprises receiving first data, wherein each of the first data refers to at least one manufacturing specification of the product. The method further comprises receiving second data, wherein each of the second data refers to at least one individualization specification of the product. The method further comprises allocating at least one of the second data to at least one of the first data. The method further comprises providing instruction data to the manufacturing device based on the first data and the allocated second data. Hereby, the instruction data are indicative of a unique appearance of the product.

Such an approach makes use of the advantages of the device outlined above.

Instruction data within the meaning of the present disclosure may refer to any information-carrying means, which may influence an operation of a device. Such means may be adapted to control the operation of the respective device. Such a device may be a device, which is adapted for manufacturing of a product, such as a three-dimensional printing device. For example, the instruction data may include CAD-data, construction plans, a 3-D model of the device, etc..

An individualized product within the meaning of the present disclosure may refer to any product manufactured by a respective manufacturing device, which includes any deviations and/or additional characteristics with respect to a product manufactured in a generic and/or common manner. Such an individualized product may refer to a product, which additionally comprises any kind of labelling. Such a labelling may include any kind of serial number or sequence number.

A manufacturing specification within the meaning of the present disclosure may refer to any information, which may be adapted for influencing the manufacturing of a product. Such a manufacturing specification may refer to a structural and/or compositional appearance of the product to be manufactured.

An individualization specification within the meaning of the present disclosure may refer to any information, which may be adapted to modify any kind of data, based on which the manufacturing of a product may be performed. Such a data modification may result in an individualization of the respective manufacturing data.

A unique appearance within the meaning of the present disclosure may refer to any specific character of an object, which is not anticipated by any related object. Such an object may refer to a product, which is manufactured by a manufacturing device. Such a specific character of the product manufactured by the manufacturing device may be different and/or distinguishable from the specific character of any other product manufactured by the manufacturing device.

In an embodiment of the device, the data provision unit is adapted to provide at least one of the instruction data with a cryptographic encoding such as a digital rights management, DRM, encoding or a digital signature of the first data.

Thereby, manipulation of the instruction data provided to the manufacturing device for manufacturing the individualized device is further impeded, which further improves the forgery-proof of the products to be manufactured.

In another embodiment of the device, the individualization specification of the second data includes at least one of a serial number of the manufacturing device, a sequence number, an allocation rule of the sequence number including a random contribution, a link to a sequence number registered at a distributed platform database and a Uniform Resource Locator.

Thereby, the device is adapted to receive individualization specification of the product, which may be exceedingly characteristic for the manner of manufacturing the individualized manufacturing device. As a matter of consequence, the history of origins of the product to be manufactured may be reproduced for anybody inspecting the authentication of the manufactured product. Thus, such means also improve the protection against forgery of the individualized manufactured product.

In another embodiment of the device, the individualization specification of the second data includes a unique modification of the manufacturing specifications.

Using such a unique modification, which may for example provide for watermarking of the manufacturing specification, authentication of a product to be manufactured based on respective manufacturing specifications may be forgery-proof.
In another embodiment of the device, the individualization specification of the second data includes an allocation rule for a label to be integrated with the product.

Thereby, the allocation of the respective individualization specification to at least one of manufacturing specification may be controlled by the second data. Since the saving of these second data is not restricted to a specific location or reservoir, the device enables a flexible allocation control for individualizing the products to be manufactured.

In another embodiment of the device, the data receiving unit is adapted to receive at least one of the second data from a distributed platform database.

Using such a distributed platform database, which may e.g. refer to a blockchain-based database, the device enables an improved degree of capacity utilization of the respective manufacturing device, since individualization and manufacturing of the product to be manufactured may be processed in time intervals, in which the capacity utilization of the manufacturing device still comprises certain vacancies.

Different blockchain-based databases have recently been established. Some of these may entirely operate in a decentralized manner, others may be offered as a host service. Some of the presently most well-known blockchain-based databases include Bitcoin, Ethereum, Hyperledger, and IBM Blockchain platform. Blockchain-based databases are conventionally used for exchanging cryptocurrency as well as for the implementation of so-called automated Smart Contracts. Data may be generally securely exchanged using such block-chain based databases.

In another embodiment of the device, the data receiving unit is adapted to receive at least one of the second data from the manufacturing device.

In such a case, since first data are not linked to a network of a plurality of participants, the adaption of the device enables an improved protection against any kind of manipulation of these first data. As a matter of consequence, the protection against forgery of the instruction data provided for manufacturing individualized products may further be improved.

In another embodiment of the device, the data provision unit is adapted to provide at least one of the second data, third data indicative of the second data, and the instruction data to a product repository.

Thereby, data relevant for manufacturing the respective manufacturing device may be deposited. These deposited data may be reloaded anytime, thereby bookkeeping regarding the manufactured products may be achieved. As an example, theses deposited data may be used for inspecting purposes by comparing these data to any products, in order to authenticate the product. Further, the deposited data may comprise further specifications with respect to a product to be manufactured, which do not unambiguously emerge from a manufactured product, but which may be constructive in assessing characteristics of such a product, such as the product's financial value.

In another embodiment of the device, the data provision unit is adapted to provide at least one reference measurement of the product to a product repository, the reference measurement being indicative of the unique appearance of the product.

Thereby, additional specifications of a manufactured product may be correlated with the specifications given from the instruction data provided for manufacturing such a product. Authentication is facilitated. In this way, a comprehensive characterization of the manufactured product may be deposited. Further, by comparing the measured characteristics of the manufactured product with the specifications from the instruction data, functioning of the manufacturing device may be monitored.

In another embodiment of the device, the instruction data include control instructions for at least one reference measurement of the product, the reference measurement being indicative of the unique appearance of the product.

In another embodiment of the device, the manufacturing specification includes at least one of a) structural information and b) compositional information of the product.

Thereby, the individualization specification of the product may be allocated to design data characterizing a physical appearance of a product. Forgery-proof is obtained.

In an embodiment of the device, the instruction data are generated by uniquely modifying the at least one of the a) structural information and b) the compositional information based on the individualization specification.

Thereby, the physical appearance of the product may additionally include a unique modification, such as a watermarking. In this way, authentication of such a product may be securely implemented.

In another embodiment, a system is disclosed, which comprises the device according to any of the above-outlined embodiments and the manufacturing device.

Thereby, a system combining an efficient, mass-production based manufacturing device and a device for individualizing manufacturing data may be provided, which may consequently improve forgery-proof.

In an embodiment of the method, the method is executed by the manufacturing device according to any of the above-outlined embodiments.

Thereby, a simple and straightforward method using substantial advantages of the above outlined device may be performed.

An allocation rule within the meaning of the present disclosure may refer to any instruction, based on which a correlation in between the first data and the second data may be performed. Such correlation may be specified in a parameterized manner by the rule, such that application to the specific use case can be implemented in accordance with the rule.

The above summary is merely intended to give a short overview over some features of some embodiments and implementations and is not to be construed as limiting. Other embodiments may comprise other features than the ones explained above.

### BRIEF DESCRIPTION OF THE DRAWINGS

The above and other elements, features, steps and characteristics of the present disclosure will be more apparent from the following detailed description of embodiments with reference to the following figures:
Figure 1 schematically illustrates a system for manufacturing an individualized product comprising a device adapted to provide instruction data according to various examples.
Figure 2 schematically illustrates an environment of a device, which is adapted to provide instruction data to a manufacturing device for manufacturing an individualized product, according to various examples.
Figure 3 schematically illustrates another environment of a device, which is adapted to provide instruction data to a manufacturing device for manufacturing an individualized product, according to various examples.
Figure 4 schematically illustrates another environment of a device, which is adapted to provide instruction data to a manufacturing device for manufacturing an individualized product, according to various examples.
Figure 5 schematically illustrates a flowchart of a method for providing instruction data to a manufacturing device for manufacturing an individualized product according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings, which are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

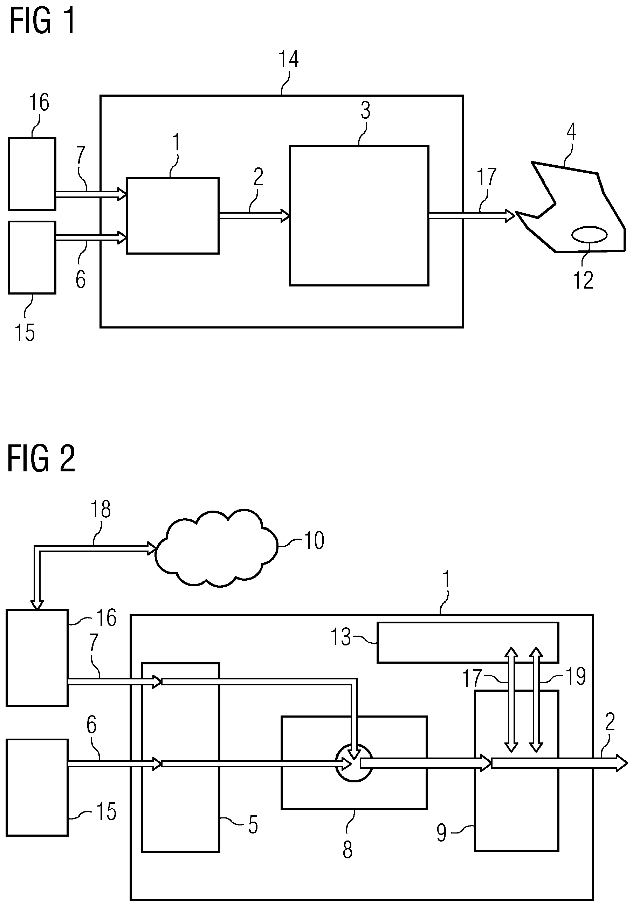

Figure 1 schematically illustrates a system 14 for manufacturing an individualized product 4 comprising a device 1 adapted to provide instruction data 2 according to various examples.

According to this, the system 14 may include a device 1 and a manufacturing device 3. The individualized product 4 manufactured by system 14 may comprise any individualization indications, such as a label 12 or a unique adaptation of the physical appearance, e.g., by shaping the exterior hull uniquely, by using unique colors, and/or by using unique smell, etc.. The device 1 included in the system 14 may be adapted to receive first data 6, which may be transmitted from a product manufacturing database 15. Further, the device 1 included in the system 14 may also be adapted to receive second data 7 from a product individualization database 16 based on the first data 6 and the second data 7. The device 1 may be adapted to provide instruction data to the manufacturing device 3. The manufacturing device 3 may then be adapted to provide the product 4 based on the instruction data 2, wherein the product 4 may leave the system 14 based on a product line 17.

The manufacturing device 3 may refer to a three-dimensional printing device. However, the manufacturing device 3 may also refer to the milling machine and/or to a laser cutter. Further, the label 12 included in the product 4 may be based on an allocation, which may be included in the second data 7.Example products 4 include: consumer goods such as electronic equipment, lamps, fitments, clothes; industry products such as integrated circuits, chip cards, etc..

Figure 2 schematically illustrates an environment of a device 1, which is adapted to provide instruction data 2 to a manufacturing device 3 for manufacturing an individualized product 4, according to various examples.

According to this, the device 2 may comprise a data receiving unit 5, which may be adapted to receive first data 6 and second data 7. Hereby, the first data 6 may refer to at least one manufacturing specification of the product 4. Such manufacturing specification may include at least one of a) structural information and b) compositional information of the product. As an example, design information of a product 4 to be manufactured by the manufacturing device 3 may be implemented in first data 6. The first data 6 may further include any means for Digital Rights Management (DRM) protection and may also include licensing information. In addition, the first data 6 received by the data receiving unit 5 may be transmitted by the product manufacturing database 15.

Further, the second data 7 may refer to at least one individualization specification of the product 4. According to this, the individualization specification of the second data 7 may include at least one of a serial number of the manufacturing device 3, a sequence number, an allocation rule of the sequence number including a random contribution, a link to a sequence number registered at a distributed platform database 10 and a Uniform Resource Locator 11. The individualization specification of the second data 7 may also include a unique modification of the manufacturing specifications. The individualization specification may also include a unique hash-value. In addition, the second data 7 received by the data receiving unit 5 may be transmitted by the product individualization database 16.

The device 1 may further include a data allocation unit 8, which is adapted for attaining the received first 6 and second 7 data from the data receiving unit 5. Hereby, the data allocation unit 8 may be adapted to allocate at least one of the second data 7 to at least one of the first data 6, thereby generating a combined data set comprising the first 6 and second 7 data.

The device 1 may further include a data provision unit 9, which may be adapted to provide instruction data 2 to the manufacturing device 3 based on the first data 6 and the allocated second data 7. Hereby, the instruction data 2 may be indicative of a unique appearance of the product 4. The data provision unit 9 may further be adapted to provide at least one of the instruction data 2 with a cryptographic encoding such as a DRM encoding or a digital signature of the first data 6.

The device 1 may further include a product repository 13. Hereby, the product repository 13 may be adapted to receive at least one of the second data 7, third data 19 indicative of the second data 7 and the instruction data 2, which are provided and transmitted, respectively by the data provision unit 9. Further, the product repository 13 may also be adapted to receive at least one reference measurement of the product 4 from the data provision unit 9. Such a reference measurement may be indicative of the unique appearance of the product 4. As an example, such a reference measurement of the product 4 may refer to at least one of a weight, a dimension, a manufacturing tolerance, a photo and an X-ray image of the product 4. With respect to such a reference measurement, the instruction data 2 may include control instructions for at least one reference measurement of the product 4, wherein the reference measurement may be indicative of the unique appearance of the product 4.

While in Fig. 2 a scenario is illustrated in which the product repository 13 is part of the device 1, as a general rule, the product repository 13 may not be part of the device 1, but rather separately implemented. For example, cloud-based or server-based implementation of the repository 13 would be possible.

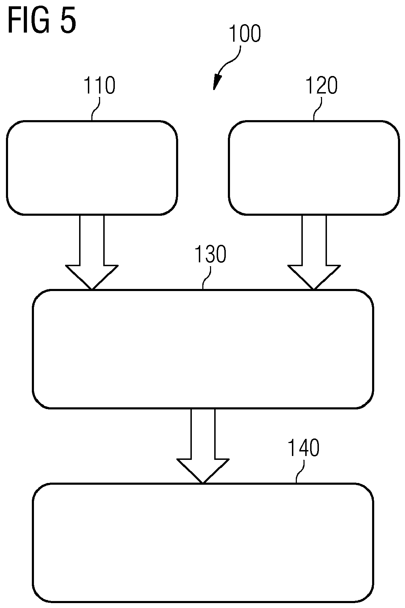

Different means may be implemented to provide the second data 7 to the data receiving unit 5. As can be deduced from Figure 5, the product individualization unit 16 connected to the data receiving unit 5 may further be connected to distributed platform database 10 using a data link 18. Such a distributed platform database 10 may refer to a blockchain-based database. According to such a configuration, the system 14 may request any individualization data 7 from distributed platform database 10 and the distributed platform database 10 may subsequently provide such individualization data 7 to the receiving unit 5 of the device 1.

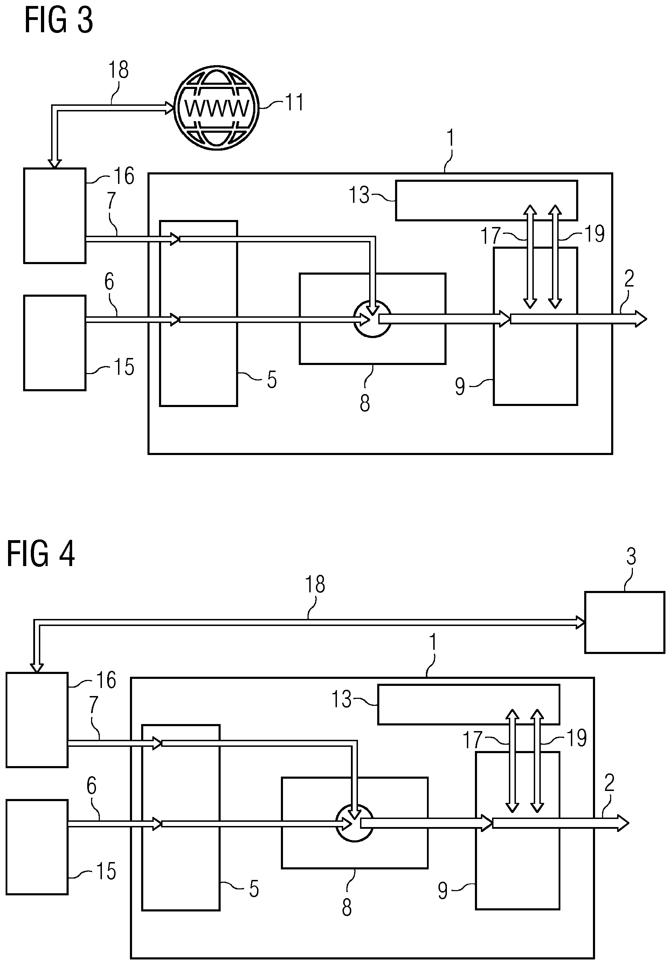

Figure 3 schematically illustrates another environment of a device 1, which is adapted to provide instruction data 2 to a manufacturing device 3 for manufacturing an individualized product 4, according to various examples. The environment of the device 1 according to Figure 3 substantially corresponds to the environment of the device 1 according to Figure 2. As can be deduced from Figure 3, the product individualization unit 16 connected to the data receiving unit 5 may further be connected to the Uniform Resource Locator (URL) 11 using a data link 18. Such an URL 11 may generally refer to a web service. According to such a configuration, the system 14 may request any individualization data 7 from the URL 11 and the URL 11 may subsequently provide such individualization data 7 to the receiving unit 5 of the device 1.

Figure 4 schematically illustrates another environment of a device 1, which is adapted to provide instruction data 2 to a manufacturing device 1 for manufacturing an individualized product 4, according to various examples. The environment of the device 1 according to Figure 4 substantially corresponds to the environment of the device 1 according to Figures 2 and 3. Contrary to Figures 2 and 3, however, the environment of As can be deduced from Figure 4, the product individualization unit 16 connected to the data receiving unit 5 may further be connected to manufacturing device 3 itself. Such a manufacturing device 3 may e.g. refer to a 3D printing device. According to such a configuration, the manufacturing device 3 itself may generate individualization specification, and may provide the second data 7 referring to this individualization specification to the data receiving unit 5.

Figure 5 schematically illustrates a flowchart of a method 100 for providing instruction data 2 to a manufacturing device 3 for manufacturing an individualized product 4 according to various examples.

Prior to 110 and 120 (not depicted according to Figure 5), first data 6 referring to at least one manufacturing specification of the product 4 may be loaded. Further, the loaded first data 6 may be evaluated, whether these data comprise any data protection, such as a DRM data protection. If the first data 6 evaluation determines data protection of the loaded first data 6, the first data 6 may be decrypted.

At 110, first data 110 may be received, wherein each of the first data 6 may refer to at least one manufacturing specification of the product 4.

At 120, second data 120 may be received, wherein each of the second data 7 may refer to at least one individualization specification of the product 4. Item 120 may be performed prior to 110, following on 110 or simultaneously with 110.

At 130, at least one of the second data 7 may be allocated to at least one of the first data 6.

At 140, instruction data 2 may be provided to the manufacturing device 3 based on the first data 6 and the allocated second data 7. Hereby, the instruction data may be indicative of a unique appearance of the product.

According to various examples, the above-outlined method may be executed by any of the above outlined configurations of the manufacturing device.

## Claims

1. A device (1), which is adapted to provide instruction data (2) to a manufacturing device (3) for manufacturing an individualized product (4), the device (1) comprising:
a data receiving unit (5), which is adapted to receive first data (6), wherein each of the first data (6) refers to at least one manufacturing specification of the product (4), and to receive second data (7), wherein each of the second data (7) refers to at least one individualization specification of the product (4),
a data allocation unit (8), which is adapted to allocate at least one of the second data (7) to at least one of the first data (6), and
a data provision unit (9), which is adapted to provide instruction data (2) to the manufacturing device (3) based on the first data (6) and the allocated second data (7), the instruction data (2) are indicative of a unique appearance of the product (4).

2. The device (1) of claim 1, wherein the data provision unit (9) is adapted to provide at least one of the instruction data (2) with a cryptographic encoding such as a Digital rights management, DRM, encoding or a digital signature of the first data (6).

3. The device (1) of any of the preceding claims, wherein the individualization specification of the second data (7) includes at least one of a serial number of the manufacturing device (3), a sequence number, an allocation rule of the sequence number including a random contribution, a link to a sequence number registered at a distributed platform database (10) and a Uniform Resource Locator (11).

4. The device (1) of any one of the preceding claims, wherein the individualization specification of the second data (7) includes a unique modification of the manufacturing specifications.

5. The device (1) of any one of the preceding claims, wherein the individualization specification of the second data (7) includes an allocation rule for a label (12) to be integrated with the product (4).

6. The device (1) of any of the preceding claims, wherein the data receiving unit (5) is adapted to receive at least one of the second data (7) from a distributed platform database (10).

7. The device (1) of any of the preceding claims, wherein the data receiving unit (5) is adapted to receive at least one of the second data (7) from the manufacturing device (3).

8. The device (1) of any of the preceding claims, wherein the data provision unit (9) is adapted to provide at least one of the second data (7), third data indicative of the second data (7), and the instruction data (2) to a product repository (13).

9. The device (1) of any of the preceding claims, wherein the data provision unit (9) is adapted to provide at least one reference measurement of the product (4) to a product repository (13), the reference measurement being indicative of the unique appearance of the product (4).

10. The device (1) of any one of the preceding claims, wherein the instruction data (2) include control instructions for at least one reference measurement of the product (4), the reference measurement being indicative of the unique appearance of the product (4).

11. The device (1) of any of the preceding claims, wherein the manufacturing specification includes at least one of a) structural information and b) compositional information of the product (4).

12. The device (1) of claim 11, wherein the instruction data (2) are generated by uniquely modifying the at least one of the a) structural information and b) the compositional information based on the individualization specification.

13. A system (14), comprising:
- the device (1) according to any of claims 1 to 12, and
- the manufacturing device (3).

14. A method (100) for providing instruction data (2) to a manufacturing device (3) for manufacturing an individualized product (4), the method comprising:
Receiving (110) first data (6), wherein each of the first data (6) refers to at least one manufacturing specification of the product (4),
Receiving (120) second data (7), wherein each of the second data (7) refers to at least one individualization specification of the product (4),
Allocating (130) at least one of the second data (7) to at least one of the first data (6), and
Providing (140) instruction data (2) to the manufacturing device (3) based on the first data (6) and the allocated second data (7), the instruction data (2) are indicative of a unique appearance of the product (4).

15. The method of claim 14,
wherein the method is executed by the manufacturing device (3) of any one of claims 1 - 12.

## Amended claims

### Amended claims in accordance with Rule 137(2) EPC.

1. A device (1), which is adapted to provide instruction data (2) to a manufacturing device (3) for manufacturing an individualized product (4), the device (1) comprising:
a data receiving unit (5), which is adapted to receive first data (6), wherein each of the first data (6) refers to at least one manufacturing specification of the product (4), and to receive second data (7), wherein each of the second data (7) refers to at least one individualization specification of the product (4),
a data allocation unit (8), which is adapted to allocate at least one of the second data (7) to at least one of the first data (6), and
a data provision unit (9), which is adapted to provide instruction data (2) to the manufacturing device (3) based on the first data (6) and the allocated second data (7), the instruction data (2) are indicative of a unique appearance of the product (4),
**characterized in that**
the data receiving unit (5) is adapted to receive at least one of the second data (7) from a distributed platform database (10).

2. The device (1) of claim 1, wherein the data provision unit (9) is adapted to provide at least one of the instruction data (2) with a cryptographic encoding such as a Digital rights management, DRM, encoding or a digital signature of the first data (6).

3. The device (1) of any of the preceding claims, wherein the individualization specification of the second data (7) includes at least one of a serial number of the manufacturing device (3), a sequence number, an allocation rule of the sequence number including a random contribution, a link to a sequence number registered at a distributed platform database (10) and a Uniform Resource Locator (11).

4. The device (1) of any one of the preceding claims, wherein the individualization specification of the second data (7) includes a unique modification of the manufacturing specifications.

5. The device (1) of any one of the preceding claims, wherein the individualization specification of the second data (7) includes an allocation rule for a label (12) to be integrated with the product (4).

6. The device (1) of any of the preceding claims, wherein the data receiving unit (5) is adapted to receive at least one of the second data (7) from the manufacturing device (3).

7. The device (1) of any of the preceding claims, wherein the data provision unit (9) is adapted to provide at least one of the second data (7), third data indicative of the second data (7), and the instruction data (2) to a product repository (13).

8. The device (1) of any of the preceding claims, wherein the data provision unit (9) is adapted to provide at least one reference measurement of the product (4) to a product repository (13), the reference measurement being indicative of the unique appearance of the product (4).

9. The device (1) of any one of the preceding claims, wherein the instruction data (2) include control instructions for at least one reference measurement of the product (4), the reference measurement being indicative of the unique appearance of the product (4).

10. The device (1) of any of the preceding claims, wherein the manufacturing specification includes at least one of a) structural information and b) compositional information of the product (4).

11. The device (1) of claim 10, wherein the instruction data (2) are generated by uniquely modifying the at least one of the a) structural information and b) the compositional information based on the individualization specification.

12. A system (14), comprising:
- the device (1) according to any of claims 1 to 11, and
- the manufacturing device (3).

13. A method (100) for providing instruction data (2) to a manufacturing device (3) for manufacturing an individualized product (4), the method comprising:
Receiving (110) first data (6), wherein each of the first data (6) refers to at least one manufacturing specification of the product (4),
Receiving (120) second data (7), wherein each of the second data (7) refers to at least one individualization specification of the product (4),
Allocating (130) at least one of the second data (7) to at least one of the first data (6), and
Providing (140) instruction data (2) to the manufacturing device (3) based on the first data (6) and the allocated second data (7), the instruction data (2) are indicative of a unique appearance of the product (4),
**characterized in that**
receiving at least one of the second data (7) is from a distributed platform database (10).

14. The method of claim 13, wherein the method is executed by the manufacturing device (3) of any one of claims 1 - 11.
